# EUROPEAN PATENT SPECIFICATION

(11) **EP 0 892 890 B1**
(45) Date of publication and mention of the grant of the patent: **31.01.2001**
(21) Application number: 97946826.1
(22) Date of filing: 01.12.1997
(51) Int. Cl.: F03D 7/02, F03D 11/04

(54) **APPARATUS FOR GENERATING ELECTRIC POWER USING WIND FORCE**
GERÄT ZUM ERZEUGEN VON ELEKTRISCHER ENERGIE MITTELS WINDKRAFT
DISPOSITIF DE PRODUCTION D'ENERGIE ELECTRIQUE UTILISANT LA FORCE DU VENT

(30) Priority: 30.11.1996 KR 9660308
(43) Date of publication of application: 27.01.1999
(73) Proprietor: Shim, Hyun Jin, Seoul 156-033 (KR)
(72) Inventor: Shim, Hyun Jin, Seoul 156-033 (KR)
(74) Representative: Fréchède, Michel
(86) International application number: PCT/KR97/00252
(87) International publication number: WO 98/26177

(56) References cited:
- WO-A-88/10368
- WO-A-94/09272
- DE-A- 3 714 858
- FR-A- 1 082 607
- GB-A- 2 039 624
- JP-A- 62 265 573

## Description

### TECHNICAL FIELD

The present invention relates to an apparatus for generating an electric power using wind force, and in particular to an improved apparatus for generating an electric power using wind force which is capable of generating an electric power using wind force on the land or in the sea.

### BACKGROUND ART

Recently, the energy-related problems are a big issue in the international society. Among the problems, there are an air pollution problem and a fossil energy deficiency problem.

Therefore, in order to overcome the above-described problems, the development of a substitute energy is desperately needed. Nevertheless to say, the substitute energy should be developed for overcoming the above-described problems.

The hydroelectric power method has been used as an important method for generating electric power. For the hydroelectric power plant, a very large area should be flooded, thus reducing the area of the land and damaging a natural life system on the land.

In addition, as a substitute energy with respect to the fossil energy, which is being developed in the industry, there is a nuclear energy. This energy causes some problems such as a nuclear waste problem, a radioactive substance problem, etc. which are international issues. In addition, in some countries, it is very difficult to prepare an area, in which the radioactive waste and substance therein are treated, due to an unstable processing method of the same.

In order to overcome the above-described problems, a technique for using solar energy, which is known as a non-pollution energy and a substitute energy, has been intensively studied. However, the technique has some problems in that the solar energy is more effectively obtained outside the atmospheric orbit, so that the same is more effectively used in a space station or a satellite. However, in the atmospheric orbit, since the amount of solar energy varies in accordance with the weather condition, the solar energy is limitedly used for the heating system of home.

In addition, a tidal power plant method has been developed, which is directed to using the ebb and flow difference of the tide. However, this method is limited to a place for obtaining a predetermined amount of ebb and flow difference of the tide.

A water wave force-based electric power generating apparatus and a method thereof are developed, which are basically directed to using the force of water waves. In connection with the above-described method, there are Korean Patent No. 35,913 (The U.S. Patent No. 5,066,867 which is the family patent of Korean Patent No. 35,913) and Korean Patent Application No. 96-11790 improved Korean Patent No. 35,913.

The above-described water wave-based electric power generating apparatus is directed to converting the force, which is generated as buoys are upwardly and downwardly moved in accordance with waves, into a rotational force, so that the thusly converted rotational force is used for driving an electric power generator.

In accordance with the water wave-based electric power generating apparatus, since at least 1m waves are always generated in the sea, it is possible to generate a desired electric power. In addition, such plant is installed in the sea which occupies 78% of the earth, there is no limit for installing the water wave-based electric power generating apparatus. The water wave-based electric power generating apparatus is conventionally installed in the land water; since the conventional water wave-based electric power generating apparatus invented by the inventor of this invention is installed in the sea, there is not limit to install the same, the area is not decreased due to the installation of the power plant.

In order to effectively overcome the above-described problems, there is disclosed a wind power generator (plant). However, the wind power plant requires a lot of strong power wind. Therefore, there is a problem in obtaining a lot of wind at usual time.

In particular, in the conventional wind power generator, a plurality of predetermined-shaped propellers are fixed at a predetermined angle, respectively, for effectively receiving the power of wind. Therefore, it is impossible to obtain a desired effect under the condition that the power of wind is below a predetermined level, for example, 20m per second. If there is the power of wind which exceeds 60m per second, the propellers may be broken due to the high power of wind.

Conventional apparatuses for generating an electric power using forces are known from the prior art.

Particularly the French Patent FR-A-1 082 607 discloses such an apparatus for generating an electric power using wind force, comprising a perpendicular fixing support body, a rotary shaft rotatably installed in this fixing support body, a propeller frame rotatably installed in an upper portion of the rotary shaft and a propeller shaft horizontally and rotatably installed in this propeller frame. The power gained from the wind force is converted and accumulated to heat.

Such known apparatus are not versatile in use to the extent that while the propeller assembly and propellers cannot be oriented with respect to the wind speed, they cannot be combined with the water wave force by installing them in the sea.

### DISCLOSURE OF THE INVENTION

Accordingly, it is an object of the present invention to provide an apparatus for generating an electric power using wind force which overcomes the aforementioned problems encountered in the background art.

It is another object of the present invention to provide an apparatus for generating an electric power using wind force which is capable of increasing an electric power generating efficiency by offsetting the power of wind since the direction of the propellers are changed when a predetermined power of wind, which exceeds a predetermined level, is applied to the apparatus.

It is another object of the present invention to provide an apparatus for generating an electric power using wind force which is capable of generating a good quality of electric power by combining the apparatus with the water wave force-based electric power generating apparatus of the inventor of this invention by installing the apparatus in the sea.

To achieve the above objects, there is provided an apparatus for generating an electric power using wind force which includes a perpendicular fixing support body; a rotary shaft rotatably installed in the fixing support body; a propeller frame rotatably installed in an upper portion of the rotary shaft; a propeller shaft horizontally and rotatably installed in the propeller frame; a propeller member installed in the propeller shaft rotatably in a forward and backward direction; a propeller assembly including a propeller unit assembly having an elastic support means so that the propeller assembly is perpendicularly maintained when the speed of wind is below a predetermined level and the same is tilted backwardly at a predetermined angle when the speed of wind is above a predetermined level; and an eclectic power generator drivingly connected with another end portion of the propeller shaft for generating an electric power.

Additional advantages, objects and features of the invention will become more apparent from the description which follows.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figures 1 through 6 are view illustrating an apparatus for generating an electric power using wind force according to a first embodiment of the present invention, of which:
Figure 1 is a rear view illustrating an apparatus for generating an electric power using wind force;
Figure 2 is a side view of Figure 1;
Figure 3 is a partially enlarged cross-sectional view of Figure 2;
Figure 4 is a side view illustrating a profile of propeller;
Figure 5 is a cross-sectional view taken along line V-V of Figure 4; and
Figure 6 is a partially enlarged view illustrating a variable operation state of propeller according to the present invention;
Figures 7 and 8 are views illustrating an apparatus for generating an electric power using wind force according to a second embodiment of the present invention, of which:

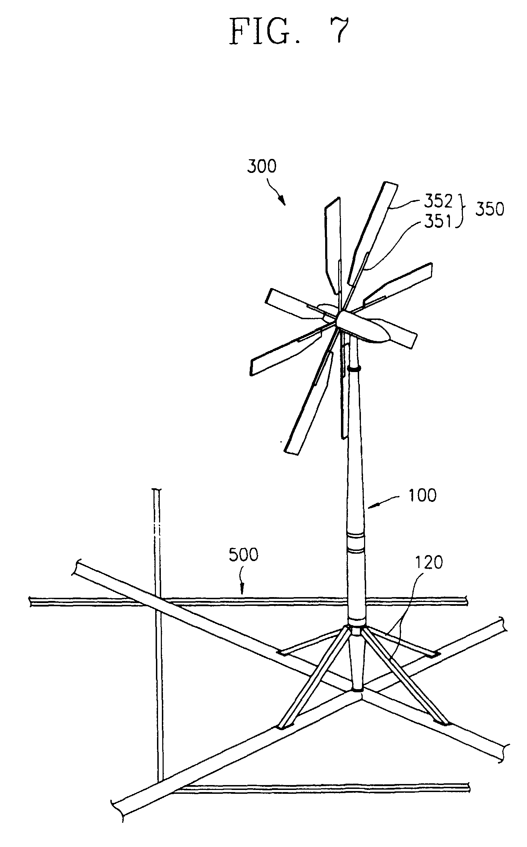

Figure 7 is a perspective view illustrating an apparatus for generating an electric power using wind force; and

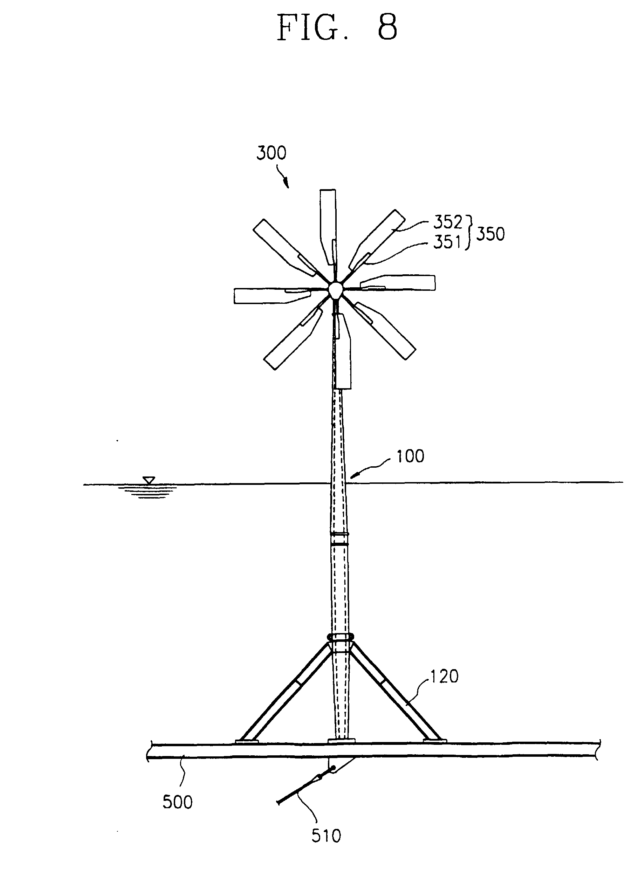

Figure 8 is a front view of Figure 7; and

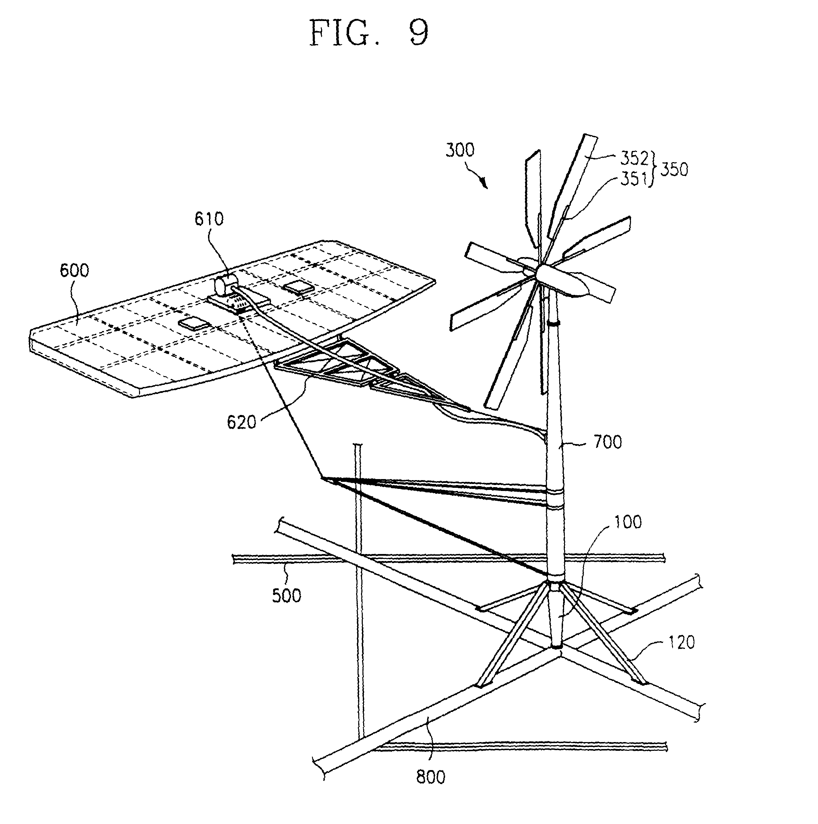

Figures 9 through 11 are views illustrating an apparatus for generating an electric force using wind force according to a third embodiment of the present invention, of which:
Figure 9 is a perspective view illustrating an apparatus for generating an electric power using wind force;

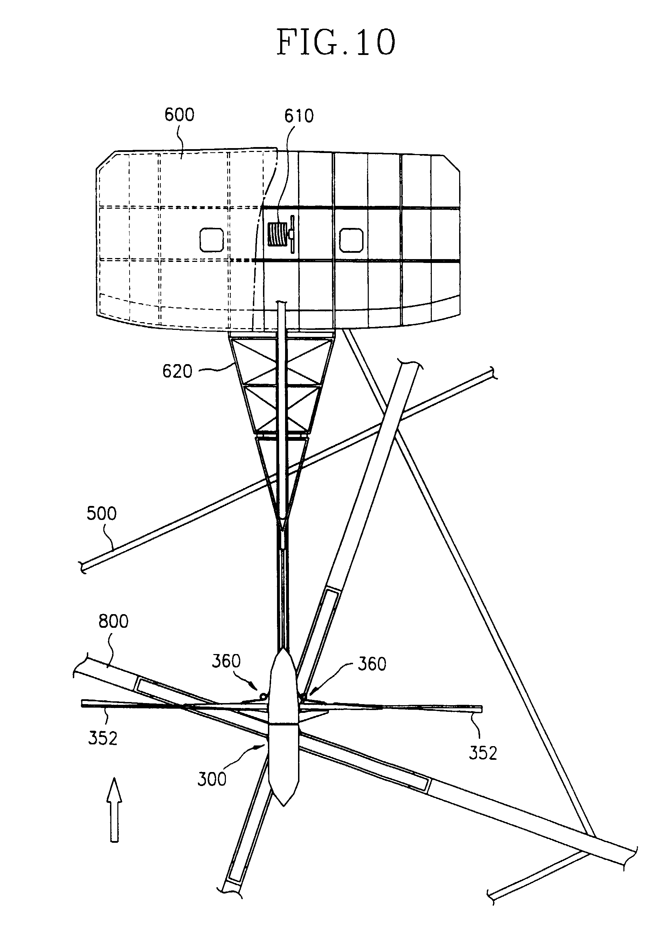

Figure 10 is a front view of Figure 9; and

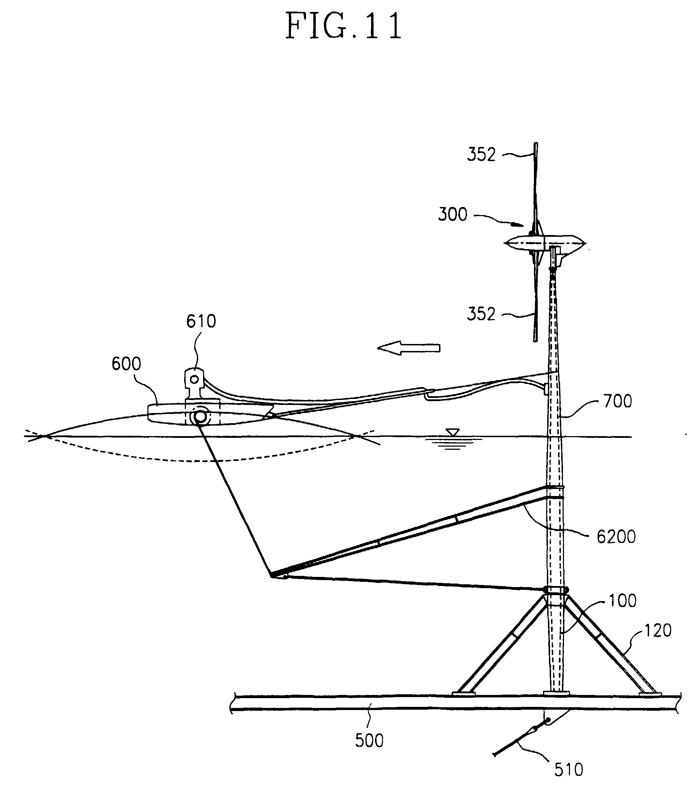

Figure 11 is a side view of Figure 10.

### MODES FOR CARRYING OUT THE PREFERRED EMBODIMENTS

The apparatus for generating an electric power using wind force according to the present invention will now be explained with reference to the accompanying drawings.

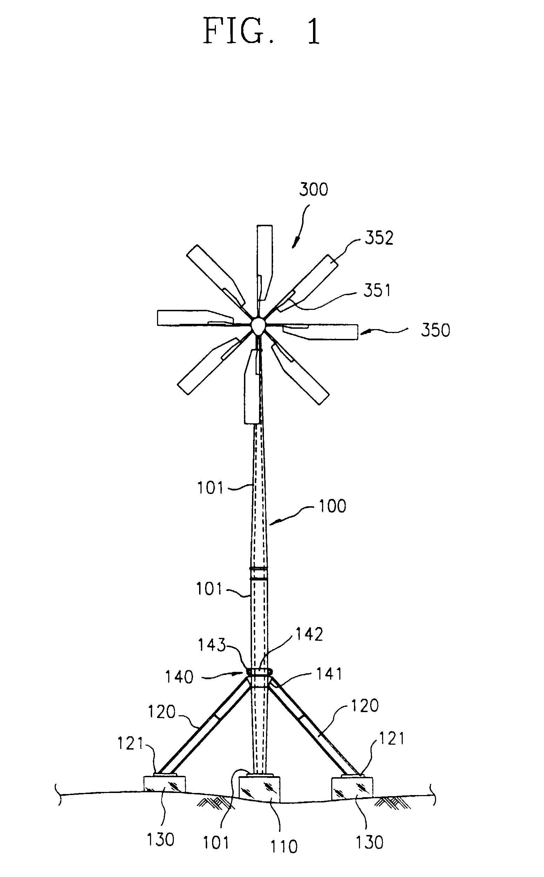

Figure 1 illustrates an apparatus for generating an electric power using wind force according to a first embodiment of the present invention, which is installed in the land.

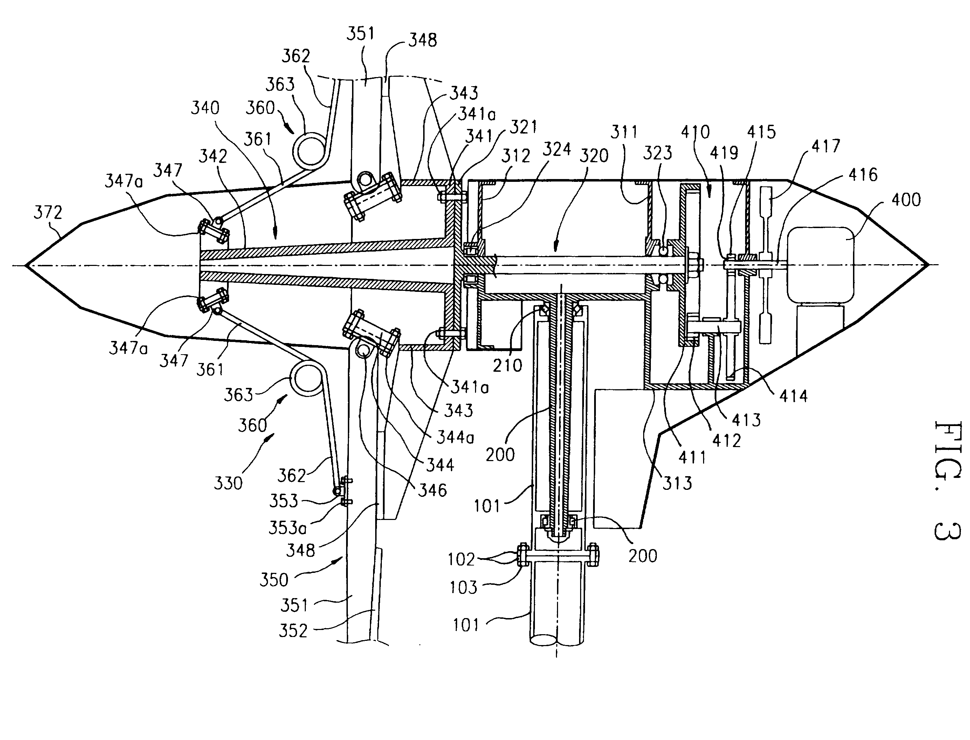

In the embodiment shown in Figure 1, there are provided a fixing support body 100 installed on the ground, a rotary shaft 200 rotatably installed on a top portion of the fixing support body 100, a propeller assembly 300 rotatably engaged with the rotary shaft 200 for generating a rotational force by receiving the power of wind, and an electric power generator 400, shown in Figure 3, operable in accordance with the rotational force generated by the propeller assembly 300 for generating an electric power.

The fixing support body 100 is perpendicularly installed on a base block 110. The fixing support body 100 may be solely installed if it can endure the power of wind or other forces. In the present invention, the fixing support body 100 is stably supported by a plurality of supporters 120.

The lower portions of the supports 120 are fixed by a plurality of sub-base blocks 130 installed around the base block 110 (in the drawings, two sub-base blocks are shown; but, actually there are three sub-base blocks), and the upper portion of the same is fixedly connected with the intermediate portion of the fixing support body 100.

The base and sub-base blocks 110 and 130 are installed on the ground by the common method, and the fixing support body 100 and the supporters 120 are installed by installing the support on the concrete base block.

Namely, anchor plates 101 and 121 are fixed to the lower portions of the fixing support body 100 and the supporters 120, and anchor bolts (not shown) installed in the sub and sub-base block 110 and 130 pass through the anchor plates 101 and 121 and then upwardly extended therefrom, and then nuts are engaged to the protruded portions of the anchor plates 101 and 121, so that the fixing support body 100 and the supporters 120 are fixed to the base and sub-base blocks 110 and 130.

Here, the method for installing the fixing support body 100 and the supporters 120 to the base and sub-base blocks 110 and 130 are not limited to the above-described method. Any method may be used for the same purpose.

The fixing support body 100 may be made of a hollow member so that a cable (not shown) for transferring an electric power generated by the electric power generator 400 to a central controller (not shown) is installed therethrough, and the supporters 120 are made of a predetermined shaped steel such as an H-shaped beam, and angle beam, etc.

The fixing support body 100 is supported by the supporters 120 by inserting a connection member 140 onto the intermediate portion of the fixing support body 100 and engaging the upper portion of the supporters 120 to the connection protrusion 141 using the bolts and nuts (not shown). In addition, since the connection member 140 includes a fixing portion 142 inserted onto the fixing support body 100, the connection member 140 is fixed to the fixing support body 100 by tightening screws 143.

Here, the connection method for connecting the fixing support body 100 and the supporters 120 are not limited to the bolts and nuts. Any method for tightly fixing the fixing support body 100 and the supporters 120 may be used for the same purpose.

The fixing support body 100 may be formed with a single member. More preferably, the fixing support body 100 is divided into a plurality of members 101 as shown in Figures 1 and 3 in accordance with the height thereof, and the same is preferably connected using the bolts 102 and nuts 103.

As shown in Figure 3, the rotary shaft 200 is rotatably supported in its upper and lower portions by bearings 210 and 220 installed in the fixing support body 100. Here, for the bearing 210 installed in the upper portion, a taper roller bearing is preferably used for the rotation of the rotary shaft 200 and supporting the weight of the thrust, and for the bearing installed in the lower portion, a cylindrical roller bearing is preferably used for implementing the rotation of the rotary shaft 200.

In addition, the rotary shaft 200 is made of a hollow shaft, as shown in Figure 3, for facilitating the cable (not shown) to be installed therewithin for transferring the electric power generated by the electric power generator 400 to the central controller (not shown).

The propeller assembly 300 includes a propeller frame 310 integrally rotatable with the rotary shaft 200, a propeller shaft 320 which is rotatably with respect to the propeller frame 310, and a propeller unit assembly 330 installed in an upper portion of the propeller shaft 320.

The propeller frame 310, as shown in Figure 3, is integrally made of an engineering plastic in order to decrease the weight of the apparatus and the fabrication line by separately fabricating the same from the rotary shaft 200.

In addition, as shown in Figure 3, the propeller frame 310 includes a pair of support plate portions 311 and 312 for supporting the propeller shaft 320, and the propeller shaft 320 is rotatably supported to the support plate portions 311 and 312 by a pair of bearings 323 and 324.

A transmission housing portion 313 is formed in the propeller frame 310 for installing the transmission unit 410 which will be explained later.

As shown in Figure 3, for the bearing 323 which is installed at a front portion among the bearings 323 and 324, a ball bearing is used for a desired rotation of the propeller shaft 320, and for the bearing 320 which is installed at a rear portion, a cylindrical roller bearing is used for supporting the weight which is applied during the operation of the apparatus.

In addition, the propeller shaft 320, as shown in Figure 3, includes a flange portion 321 for engaging the propeller unit assembly 330 to the rear portion, and a threaded portion 322 for engaging the transmission unit 410 to the end portion.

The propeller unit assembly 330, as shown in Figure 3, includes a rotary member 340 engaged to a rear portion of the propeller shaft 320, a plurality of propeller members 350 (in the drawings, the number of the same is eight) which are forwardly and rearwardly rotatable and are supported at the inner and outer portions of the rotary member 340, and an elastic support member for elastically supporting the propeller member 350 in the forward direction.

The rotary shaft 340 includes a flange portion 341 engaged to the ear portion flange portion 325 of the propeller shaft 320, a shaft portion 342 rearwardly extended from the center portion of the flange portion 341, and a plurality of propeller support plates 343 (in the drawings, the number of the same is 8, identically to the number of propellers) formed on an outer circumferential intermediate portion of the shaft portion 342.

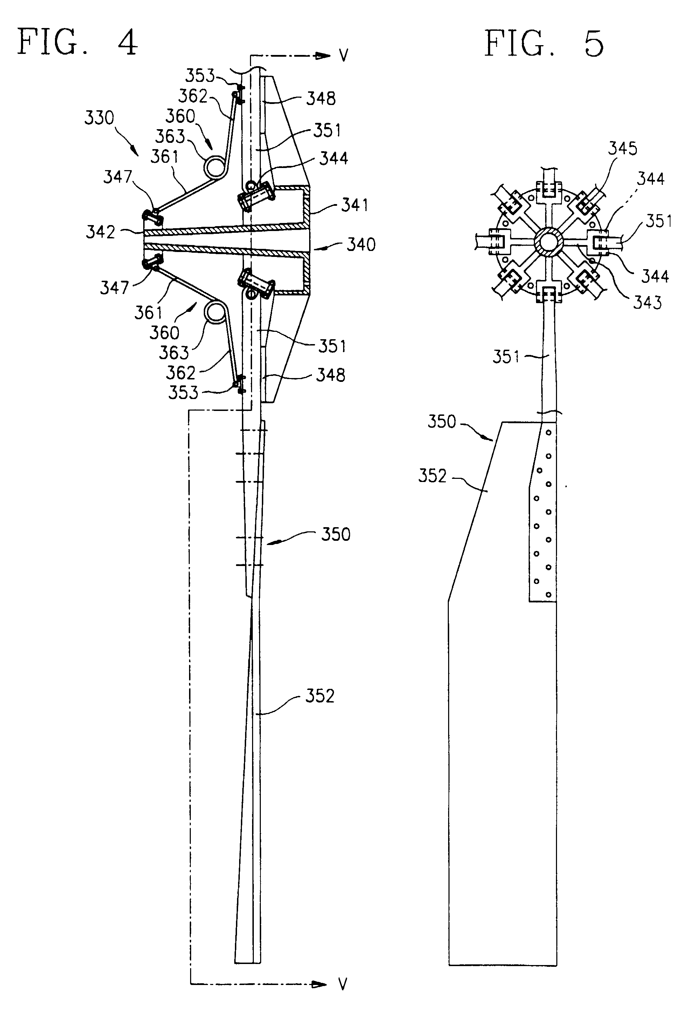

As shown in Figure 5, the propeller support plates 343 are formed radially with respect to the axis line, and a pair of hinge plates 344 having a propeller support groove 345 are formed on the end portion thereof.

The hinge plates 344 may be made separately from the propeller support plate 343 and then may be engaged using the screw 344a. In another embodiment, the same may be made integrally with the propeller support plate 343.

A stopper 347 is formed in the propeller support plate 343 in order to prevent an over rotation by which the propeller member 350 is positioned at a right angle with respect to the propeller shaft 320 in the forward direction.

The propeller member 350 includes propeller connection rods 351 which are hinged at the end portion of the propeller support plate 343 rotatably in the front or rear directions and radially extended therefrom, and a propeller plate 352 threadedly engaged with the propeller connection rod 351.

In order to rotatably hinge the inner portion of the propeller connection rod 351 to the end portion of the propeller support plate 343, the inner portion of the propeller connection rod 351 is inserted into the propeller support groove portion 345 formed on the portion of the propeller support plate 343, and the hinge pin 346 passes through the hinge plate 344 and the propeller connection rod 351.

As shown in Figures 3 and 4, the elastic support member includes a spring engaging portion 347 formed on an end portion of the shaft portion 342 of the rotary member 340, and a torsion spring 360 having arms 361 and 362 engaged to the spring engaging portion 353, respectively, installed in the propeller connection rod 351.

The torsion spring 360 is installed by winding the turn portion 363 to the hinge pin 346 hinged to the hinge plate 344 of the support plate 343 with respect to the propeller connection rod 351, and the end portions of the arms 361 and 362 may elastically support the spring engaging portions 347 and 353. In this case, since a desired elastic support is not implemented if the arms 361 and 362 are escaped from the spring engaging portions 347 and 353. Therefore, the arms 361 and 362 are engaged to the spring engaging portions 347 and 353 so that the turn portion 363 is movable from its position.

The spring engaging portions 347 and 353 may be fabricated independently from the propeller support plate 343 and the screws 347a and 353a, and the same may be fabricated integrally with the propeller support plate 343 and the propeller connection rod 351.

The electric power generator 400, as shown in Figure 3, is installed in the end portion of the propeller shaft 320 through the transmission unit 410.

The transmission unit 410 includes a ring gear 411 installed in the transmission housing portion 313 formed integrally with the end portion of the propeller frame 310 and fixed to the rear portion of the propeller shaft 320, a planet gear 412 intermeshed with the inner portion circumferential surface of the ring gear 411, a larger diameter gear 414 coaxially fixed with the planet gear 412, a small diameter 415 intermeshed with the large diameter gear 414, and an output shaft 416 fixed to the small diameter gear 415.

The ring gear 411 is fixedly installed in the propeller shaft 320 by passing-through the threaded portion 322 formed on the rear portion of the propeller shaft 320 into the center portion thereof and by engaging the nuts 418 to the threaded portion 322, and the planet gear 412 and the large diameter 414 are coaxially fixed to both ends of the driving shaft 413, and the output shaft 416 is rotatably supported by the transmission housing portion 313.

The output shaft 416 is installed integrally with the shaft of the electric power generator 400, and the small diameter gear 415 and the output shaft 416 are connected with the one way clutch bearing 419. The one way clutch bearing 419 is used for transferring the rotational force of the small diameter gear 415 to the output shaft 416 when wind is blown in the normal direction, and when the propeller unit assembly 330 is reversely rotated by a sudden reverse wind, the small diameter gear 415 is slipped with respect to the output shaft 416, so that the rotational force is not transferred to the output shaft 416, and thus the output shaft 416 is always rotated in a predetermined direction (normal direction).

In addition, a flywheel 417 is installed in the output shaft 416, so that the rotation of the output shaft is properly implemented by the inertia force.

For the electric power generator 400, a direct current generator is used. The thusly generated electric power is transferred to the battery (not shown) installed in the central controller (not shown) through the cable (not shown) passing through the interior of the rotary shaft 200 and the fixing support body 100.

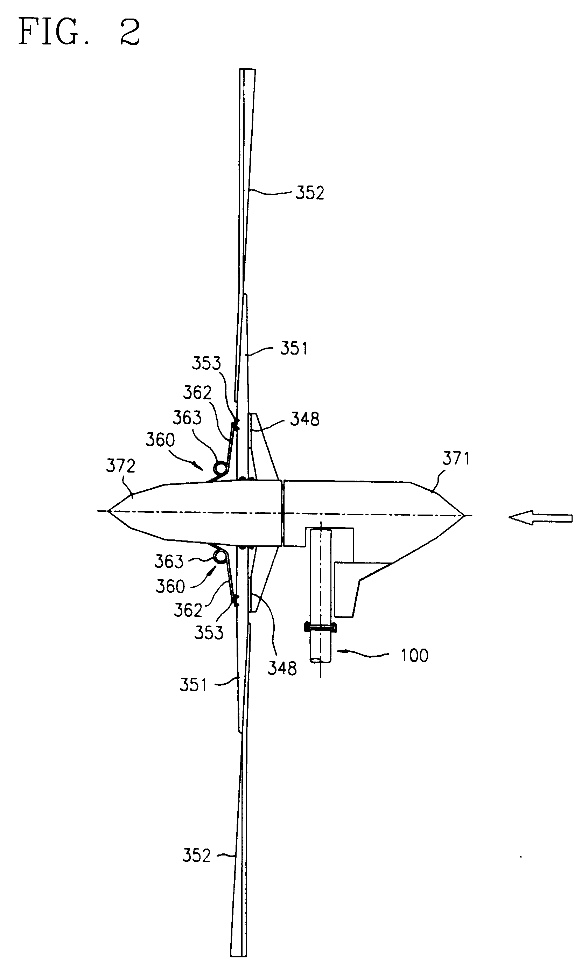

As shown in Figures 2 and 3, the propeller assembly 300 is covered by the front and rear side covers 371 and 372 for preventing duct or foreign materials from being transferred thereinto. The covers 371 and 372 are formed in a streamline shape for minimizing the resistance of the wind.

In addition, the electric power generator 400 is installed in the cover 371. More preferably, an electric power generator mount may be formed in the propeller frame 310 for mounting the electric power generator 400 thereon.

The apparatus for generating an electric power using wind force may be installed one independent structure. More preferably, a plurality of apparatuses may be installed for generating a large amount of electric power by parallely connecting the same .

The operation for generating an electric power will now be explained with reference to the accompanying drawings.

When wind is blown from the righthand direction as shown in the drawings in a state that the apparatus for generating an electric power using wind force is installed as shown in Figure 1, the propeller member 350 is rotated by the power of the wind, and then the rotary member 340 connected with the propeller member 350 is rotated.

The rotational force of the rotary member 340 is transferred to the propeller shaft 320 through the end portion flange portion 341 of the rotary member 340 and the flange portion 321 connected with the end portion flange portion 341, thus rotating the propeller shaft 320.

When the propeller shaft 320 is rotated, both ends of the same are supported by the propeller frame 310 by the bearings 323 and 324. At this time, since the forward bearing 323 is made of a ball bearing, and the rearward bearing 324 is made of a cylindrical roller bearing, the propeller shaft 320 is designed to be rotatable and to endure the power of wind.

The rotational force of the propeller shaft 320 is transferred to the ring gear 411 of the transmission unit 410 connected with the threaded portion 322 by the nuts 418, and the rotational force is firstly increased while the same is being transferred to the planet gear 412 intermeshed with the ring gear 411. Therefore, the large diameter gear 414 coaxially installed in the planet gear 412 by the driving shaft 413 is rotated, and the rotational force is secondary increased while the small diameter gear 415 intermeshed with the large diameter gear 414 is being rotated, and then the same is transferred to the output shaft 416 connected with the small diameter gear 415.

Therefore, the output shaft 416 is rotated, and the electric power generator 400 is driven, thus generating an electric power.

At this time, since the flywheel 417 is installed in the output shaft 416, it is possible to implement a continuous rotation by the inertia force thereof.

When the wind is blown in the reverse direction, a rotational moment is generated with respect to the vertical shaft by the power of wind. Therefore, the entire propeller assembly 300 is rotated by the thusly generated rotational moment with respect to the rotary shaft 200. Namely, the central axial line of the propeller unit assembly 330 is always coincided with the direction of wind.

While the rotary shaft 200 is being rotated, the rotary shaft 200 is supported by the upper and lower side bearings 210 and 220 with respect to the fixing support body 100, and for the upper bearing 210, the taper roller bearing is used. In addition, for the lower bearing 220, since the cylindrical roller bearing is used, the weight of the propeller assembly 200 is effectively supported thereby, and the rotation of the rotary shaft 200 is properly implemented.

At this time, when the direction of wind is suddenly changed, the propeller member 350 may be reversely rotated since the above-described rotational operation of the rotary shaft 200 is not implemented, a slip occurs in the bearing 419 between the small diameter gear 415 and the output shaft 416. Therefore, the rotational force of the small diameter gear 415 is not transferred. Therefore, the output shaft 416 is normally rotated by the inertia force of the flywheel 417 in the normal rotation mode.

In addition, in the propeller member 350, the propeller connection rod 351 is always made perpendicular with respect to the propeller shaft 320 since the propeller connection rod 351 is engaged with the stopper 347, so that the rotation force generation efficiency of the propeller member 350 which is rotated by the power of wind is maximized.

Here, the elastic support member is used for maximizing the efficiency of the rotational force of the propeller member 350 when the speed of wind is less than 20m/sec, and if the speed of wind exceeds a predetermined speed, for example, 20m/sec, the power of the wind overcomes the elastic force of the elastic support member, so that the propeller member 350 is backwardly tilted with respect to the hinge pin 346, thus decreasing the power of wind applied to the propeller plate 352, and thus it is possible to prevent the damages of the propeller member 350 and the propeller assembly 300.

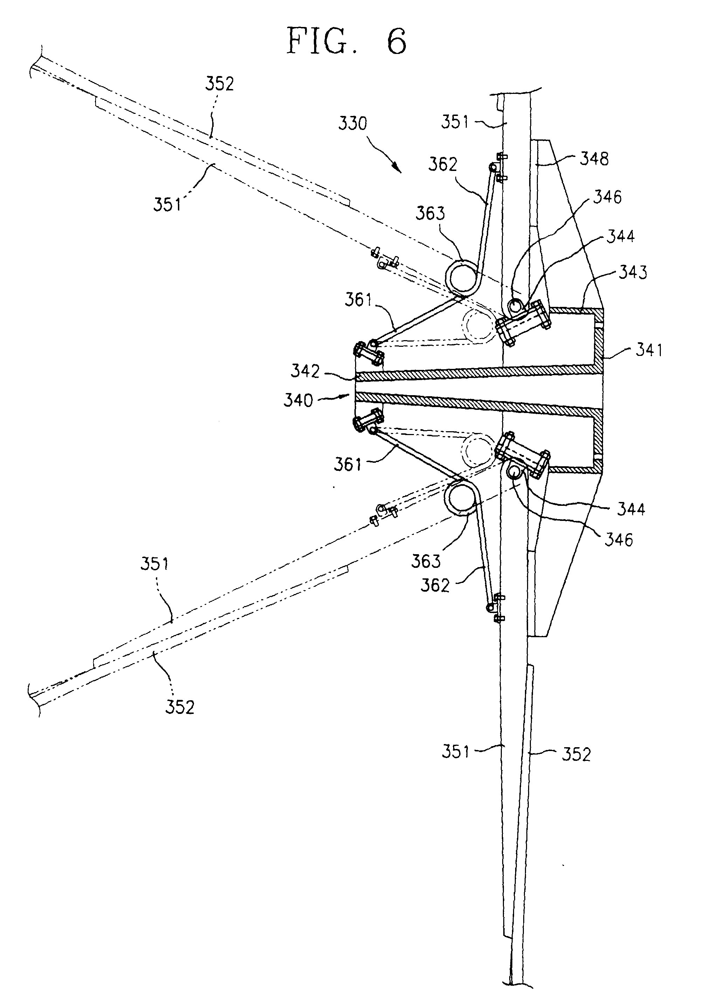

As shown in Figure 6, the broken line (virtual line) denotes a state that the propeller member 350 is fully tilted backwardly when the speed of wind exceeds 60m/sec.

In the state that the propeller member 350 is tilted backwardly by the power of wind, the power of which applied to the propeller member 350 is decreased by the tilted angle of the same, and the rotational force is continuously applied to the propeller member 350, so that it is possible to continuously generate the electric power.

In the torsion spring 360 of the elastic support member, since the arms 361 and 362 are fixed to the spring engaging portion 347 of the rotation member 340 and the spring engaging portion 353 of the propeller unit connection rod 351, and the turn portion 363 is freely position in a predetermined portion, the same is not escaped even when the propeller member 350 is suddenly rotated.

In a state that the propeller member 350 is fully tilted backwardly by the power of wind, when the speed of wind is decreased below a predetermined level, the propeller member 350 is returned to the original position by the operation of the elastic support member, as shown by the full line in Figure 6.

In addition, the direct current generated by the electric power generator 400 is charged into the battery of the central controller, and is transferred to a predetermined element after a few processes.

Figures 7 and 8 illustrates the apparatus for generating an electric power using wind force which is installed in the sea in accordance with a second embodiment of the present invention.

As shown therein, the rotary shaft 200 is rotatably installed in the fixing support body 100 which is installed on the lattice frame 500 installed in a buoy which is submerged in the sea and is connected with an anchor block (not shown) installed in the bottom surface under the sea and connected with the anchor wire 510. Thereafter, the propeller assembly 30 is installed on the rotary shaft 200, so that it is possible to generate an electric power using a wind force in the sea. In this case, since the apparatus is installed in the sea, the place for installing the apparatus is not limited compared to the occasion when installing in the land. Since the constructions of the rotary shaft 200, the propeller assembly 300 and the electric power generator 400 are identical with the construction of the apparatus according to a first embodiment of the present invention, the identical elements are given the same numerals.

Figures 9 through 11 illustrates an apparatus for generating an electric power using a wind force which is adapted to the apparatus of Korea Patent Application No. 96-11790, so that it is possible to more effectively generate an electric power using the apparatus of Korea Patent Application No. 96-11790 and the apparatus for generating an electric power using a wind force according to the present invention.

In this embodiment, as shown in Figures 7 and 8, the rotary shaft 200 is installed on the buoy rotation shaft 700 rotatably supporting the buoy 600 to the fixing support body 100 installed on the lattice frame 500 submerged in the sea like the embodiments of Figures 8 and 9. Since the construction of the embodiment of Figures 10 through 12 is. the same as the embodiment of Figures 8 and 9, the description thereof will be omitted.

In Figures 9 through 11, reference numeral 610 denotes a pump installed in a buoy, 620 denotes a support member supporting the buoy 600 to be upwardly and downwardly moved, 800 denotes a pressure liquid transfer tube for transferring a pressure liquid generated by the pump 610.

## Claims

1. An apparatus for generating an electric power using wind force, comprising a perpendicular fixing support body (100), a rotary shaft (200) rotatably installed in the fixing support body (100), a propeller frame (310) rotatably installed in an upper portion of the rotary shaft (200), a propeller shaft (320) horizontally and rotatably installed in the propeller frame (310), and a propeller member (350) installed in the propeller shaft (320) rotatably in a forward and backward direction, characterized by:
- a propeller assembly (300) including a propeller unit assembly (300) having an elastic support means (360) so that the propeller assembly (300) is perpendicularly maintained when the speed of wind is below a predetermined level and the same is tilted backwardly at a predetermined angle when the speed of wind is above a predetermined level; and
- an electric power generator (400) drivingly connected with another end portion of the propeller shaft (320) for generating an electric power.

2. The apparatus of claim 1, characterized in that said fixing support body (100) is installed in a lattice frame submerged in the sea, and said rotary shaft (200) is rotatably installed in the fixing support body (100) and is rotatably supported on a buoy rotation shaft (700) rotatably supporting the buoy (600) which generates a predetermined driving force as it is moved upwardly and downwardly in accordance with waves.

3. The apparatus of claim 1, characterized in that in said propeller unit assembly (330), a rotary member (340) is fixed to one end of the propeller shaft (320), and the propeller assembly (300) is rotatably hinged to propeller assembly support plates (311 and 12) formed in the rotary member (340), movably in the forward and backward directions.

4. The apparatus of either claim 1 or claim 3, characterized in that said propeller assembly (300) includes a propeller connection rod (351) rotatably supported to the propeller assembly support plates (311 and 12) in the forward and backward directions, and a propeller plate (352) attached to the propeller connection rod (351).

5. The apparatus of either claim 1 or claim 3, characterized in that said elastic support means is a torsion spring (360) both arms (361,362) of which are connected to a first spring engaging portion (347) installed in the rotary member (340) and a second spring engaging portion (353) installed in the propeller connection rod (351).

6. The apparatus of claim 1, further comprising a transmission unit (410) installed between the propeller shaft (320) and the electric power generator (400).

7. The apparatus of claim 6, characterized in that said transmission unit (410) includes:
- a ring gear (411) fixed to the propeller shaft (320);
- a planet gear (412) intermeshed with the inner circumferential surface of the ring gear (411);
- a large diameter gear (414) coaxially connected with the planet gear (412);
- a small diameter gear (415) intermeshed with the large diameter gear (414); and
- an output shaft (416) fixed to the small diameter gear (415) coaxially connected with a shaft of electric power generator (400).

8. The apparatus of claim 7, characterized in that a one way clutch bearing (419) is installed between the small diameter gear (415) and the output shaft (416).

9. The apparatus of either claim 7 or claim 8, wherein said output shaft (416) includes a flywheel (417) installed therein.

## Patentansprüche

1. Gerät zum Erzeugen elektrischer Leistung unter Benutzung von Windkraft, mit:
einem senkrechten Befestigungstragkörper (100), einer drehbar in dem Befestigungstragkörper (100) eingebauten Drehwelle (200), einem drehbar in einem oberen Abschnitt der Drehwelle (200) eingebauten Propellerrahmen (310), einer horizontal und drehbar in dem Propellerrahmen (310) eingebauten Propellerwelle (320) und einem in der Propellerwelle (320) eingebauten Propellerteil (350), das drehbar in der Vorwärts- und Rückwärtsrichtung ist;
gekennzeichnet durch:
- einen Propelleraufbau (300) mit einem Propellereinheitenaufbau (300), der ein elastisches Tragmittel (360) so aufweist, daß der Propelleraufbau (300) senkrecht gehalten wird, wenn die Windgeschwindigkeit unter einem vorbestimmten Pegel ist, und daß derselbe nach hinten um einen vorbestimmten Winkel geneigt wird, wenn die Windgeschwindigkeit über einem vorbestimmten Pegel ist; und
- einen elektrischen Leistungsgenerator (400), der antriebsmäßig mit einem anderen Endabschnitt der Propellerwelle (320) verbunden ist, zum Erzeugen elektrischer Leistung.

2. Gerät nach Anspruch 1,
dadurch gekennzeichnet, daß der Befestigungstragkörper (100) in einem Gitterrahmen eingebaut ist, der in der See untergetaucht ist, und daß die Drehwelle (200) drehbar in dem Befestigungstragkörper (100) eingebaut ist und drehbar auf einer Bojendrehwelle (700) getragen ist, die drehbar die Boje (600) trägt, die eine vorbestimmte Antriebskraft erzeugt, während sie sich gemäß der Wellen aufwärts und abwärts bewegt.

3. Gerät nach Anspruch 1,
dadurch gekennzeichnet, daß in dem Propellereinheitenaufbau (330) ein Drehteil (340) an einem Ende der Propellerwelle (320) befestigt ist und daß der Propelleraufbau (300) drehbar an Propellerzusammenbautragplatten (311 und 12) angelenkt ist, die in dem Drehteil (340) in der Vorwärts- und Rückwärtsrichtung bewegbar gebildet sind.

4. Gerät nach entweder Anspruch 1 oder Anspruch 3,
dadurch gekennzeichnet, daß der Propelleraufbau (300) eine Propellerverbindungsstange(351), die drehbar an den Propellerzusammenbautragplatten (311 und 12) in der Vorwärts- und Rückwärtsrichtung gelagert ist, und eine Propellerplatte (352), die an der Propellerverbindungsstange(351) angebracht ist, aufweist.

5. Gerät nach entweder Anspruch 1 oder Anspruch 3,
dadurch gekennzeichnet, daß das elastische Tragmittel eine Torsionsfeder (360) ist, von der beide Arme (361, 362) mit einem ersten Federeingriffsabschnitt (347), der in dem Drehteil (340) eingebaut ist, und einem zweiten Federeingriffsabschnitt (353), der in der Propellerverbindungsstange (351) eingebaut ist, verbunden sind.

6. Gerät nach Anspruch 1, weiter mit einer Übertragungseinheit (410), die zwischen der Propellerwelle (320) und dem elektrischen Leistungsgenerator (400) eingebaut ist.

7. Gerät nach Anspruch 6,
dadurch gekennzeichnet, daß die Übertragungseinheit (410) aufweist:
- ein Ringzahnrad (411), das an der Propellerwelle (320) befestigt ist;
- ein Planetenzahnrad (412), das mit der inneren Umfangsoberfläche des Ringzahnrades (411) kämmt;
- ein Zahnrad (414) großen Durchmessers, das koaxial mit dem Planetenzahnrad (412) verbunden ist;
- ein Zahnrad (415) kleinen Durchmessers, das mit dem Zahnrad (414) großen Durchmessers kämmt; und
- eine Ausgangswelle (416), die an dem Zahnrad (415) kleinen Durchmessers befestigt ist, das koaxial mit einer Welle des elektrischen Leistungsgenerators (400) verbunden ist.

8. Gerät nach Anspruch 7,
dadurch gekennzeichnet, daß ein Ein-Weg-Kupplungslager (419) zwischen dem Zahnrad (415) kleinen Durchmessers und der Ausgangswelle (416) eingebaut ist.

9. Gerät nach entweder Anspruch 7 oder Anspruch 8, bei dem die Ausgangswelle (416) ein darin eingebautes Schwungrad (417) aufweist.

## Revendications

1. Dispositif pour générer de l'énergie électrique utilisant la force du vent, comprenant un corps de support de fixation perpendiculaire (100), un arbre tournant (200) installé de façon tournante dans le corps de support de fixation (100), un châssis d'hélice (310) installé de façon tournante dans une partie supérieure de l'arbre tournant (200), un arbre d'hélice (320) installé horizontalement et pouvant tourner dans le châssis d'hélice (310), un élément d'hélice (350) installé dans le châssis d'hélice (320) pouvant tourner dans la direction avant et arrière, caractérisé par :
- un assemblage d'hélice (300) comprenant un assemblage d'unité d'hélice (300) ayant un moyen de support souple (360) pour que l'assemblage d'hélice (300) soit maintenu perpendiculairement lorsque la vitesse du vent est sous un niveau prédéterminé et celui-ci est incliné vers l'arrière selon un angle prédéterminé lorsque ladite vitesse du vent est au-dessus d'un niveau prédéterminé ; et
- un générateur d'énergie électrique (400) raccordé par entraînement à une autre partie d'extrémité de l'arbre d'hélice (320) pour générer de l'énergie électrique.

2. Dispositif selon la revendication 1, caractérisé en ce que ledit corps de support de fixation (100) est installé dans un châssis de réseau submergé dans la mer, et ledit arbre tournant (200) est installé de façon tournante dans le corps de support de fixation (100) et est supporté de façon tournante sur un arbre tournant de bouée (700) supportant de façon tournante la bouée (600) qui génère une force d'entraînement prédéterminée lorsqu'elle est déplacée vers le haut et vers le bas en fonction des vagues.

3. Dispositif selon la revendication 1, caractérisé en ce que dans ledit assemblage d'unité d'hélice (330), un élément tournant (340) est fixé à une extrémité de l'arbre d'hélice (320), et l'assemblage d'hélice (300) est articulé de façon tournante avec la plaque de support d'assemblage d'hélice (311 et 12) formée dans l'élément tournant (340), pouvant se déplacer dans les directions avant et arrière.

4. Dispositif selon la revendication 1 ou la revendication 3, caractérisé en ce que ledit assemblage d'hélice (300) comprend une tige de raccordement d'hélice (351) supportée de façon tournante avec les plaques de support d'assemblage d'hélice (311 et 12) dans les directions avant et arrière, et une pale d'hélice (352) fixée à la tige de raccordement d'hélice (351).

5. Dispositif selon la revendication 1 ou la revendication 3, caractérisé en ce que ledit moyen de support souple est un ressort de torsion (360) dont les deux bras (361, 362) sont raccordés à une première partie de prise de ressort (347) installée dans l'élément tournant (340) et une seconde partie de prise de ressort (353) installée dans la tige de raccordement d'hélice (352).

6. Dispositif selon la revendication 1, comprenant en outre une unité de transmission (410) installée entre l'arbre d'hélice (320) et le générateur d'énergie électrique (400).

7. Dispositif selon la revendication 6,
caractérisé en ce que ladite unité de transmission (410) comprend :
- un engrenage annulaire (411) fixé à l'arbre d'hélice (320) ;
- un engrenage planétaire (412) s'engrenant avec la surface circonférentielle interne de l'engrenage annulaire (411) ;
- un engrenage de grand diamètre (414) raccordé coaxialement à l'engrenage planétaire (412) ;
- un engrenage de petit diamètre (415) s'engrenant avec un engrenage de grand diamètre (414) ; et
- un arbre de sortie (416) fixé à l'engrenage de petit diamètre (415) raccordé coaxialement à un arbre du générateur d'énergie électrique (400).

8. Dispositif selon la revendication 7, caractérisé en ce qu'un roulement à accouplement unidirectionnel (419) est installé entre l'engrenage de petit diamètre (415) et l'arbre de sortie (416).

9. Dispositif selon la revendication 7 ou la revendication 8, dans lequel l'arbre de sortie (416) comprend un volant (417) installé dans celui-ci.
